# FASCICULE DE BREVET EUROPEEN

(11) **EP 0 835 813 B1**
(45) Date de publication et mention de la délivrance du brevet: **16.10.2002**
(21) Numéro de dépôt: 97402121.4
(22) Date de dépôt: 12.09.1997
(51) Int. Cl.: B65D 1/02, B65D 25/54

(54) **Récipient à bande(s) de couleur**
Behälter mit einem Farbband
Container with coloured band(s)

(30) Priorité: 07.10.1996 FR 9612198
(43) Date de publication de la demande: 15.04.1998
(73) Titulaire: L'OREAL, 75008 Paris (FR)
(72) Inventeur: De Laforcade, Vincent, 78300 Rambouillet (FR)
(74) Mandataire: Boulard, Denis

(56) Documents cités:
- EP-A- 0 508 168
- EP-A- 0 665 168
- FR-A- 2 083 576
- GB-A- 2 150 918
- US-A- 3 343 568

## Description

La présente invention a trait à un récipient, de type flacon, poche ou tube, pour produit de consistance liquide à pâteuse selon le préambule de la revendication 1. De tels récipients sont utilisés notamment pour le conditionnement de produits cosmétiques, tels que des shampooings, des crèmes de soin, des lotions, ou de pâtes, telles que des pâtes dentifrices.

Dans le domaine de l'emballage et du flaconnage, en particulier en cosmétique, on est toujours à la recherche de conditionnements nouveaux et originaux. La plupart du temps, on a recours à des étapes supplémentaires d'ornementation des récipients ou des flacons. Ces étapes augmentent les coûts de fabrication et, dans le cas des récipients en matière plastiques, ne donnent pas toujours un résultat esthétique très satisfaisant.

On a déjà proposé des flacons présentant au moins une bande plus ou moins fine, orientée suivant l'axe principal du flacon, et constituée d'un matériau de couleur différente de la couleur du matériau formant le reste du récipient. Cette bande longitudinale, outre le caractère esthétique, peut permettre, en utilisant un matériau translucide, de renseigner l'utilisateur sur la quantité de produit restant dans le récipient. Par ailleurs, une zone de couleur différente peut être utilisée pour renseigner l'utilisateur sur l'endroit ou il est souhaitable de presser le flacon, afin d'optimiser la vidange du récipient. Un tel récipient à bande translucide est décrit par exemple dans la demande de brevet Européen EP-A- 0 508 168 ou dans le brevet US 3 343 568.

A titre d'exemple encore, la demande de brevet EP-A-0 385 942 décrit un flacon obtenu par extrusion soufflage, à partir d'une paraison dont au moins une bande est constituée d'un matériau de dureté différente de la dureté du reste du matériau, afin de conférer à la structure une meilleure rigidité.

Typiquement, de tels récipients sont réalisés généralement par soufflage d'une ébauche tubulaire obtenue par extrusion ou par injection, ou dans le cadre d'un récipient bi-matière, par co-extrusion ou bi-injection.

Selon la technique d'extrusion, les matières plastiques sont chauffées et mises sous pression par un ensemble vis-fourreau afin de fournir, par l'intermédiaire d'une tête d'extrusion, une ébauche tubulaire sous forme d'une paraison chaude. Cette ébauche tubulaire est prise ensuite entre deux demi-moules qui présentent la forme inverse du récipient désiré et le soufflage permet la mise en forme de la paraison qui s'étire sous la pression et prend la forme du moule. Un refroidissement permet la fixation de la matière dans la forme ainsi obtenue. Dans le cas de la co-extrusion, la tête d'extrusion est alimentée par deux voies d'alimentation de manière à ce que la paraison présente une fine bande d'un matériau de composition et/ou de couleur différente, la largeur initiale de la bande dans la paraison étant calculée en fonction de la largeur souhaitée de la bande sur le récipient. En effet, plus on force, par le soufflage, la matière à s'éloigner de sa position initiale, plus la matière est étirée et affinée en largeur et en épaisseur.

Selon la technique d'injection, ou plus précisément de bi-injection dans le cas d'un récipient bi-matière, l'ébauche tubulaire, appelée généralement « préforme» est réalisée dans un moule dans laquelle on moule en premier lieu la partie du flacon formée par le premier matériau, des moyens, sous forme d'un tiroir, étant prévus pour empêcher le premier matériau de s'écouler dans la zone correspondant à la bande longitudinale. On retire ensuite le tiroir et on coule le second matériau de manière à former la bande longitudinale.

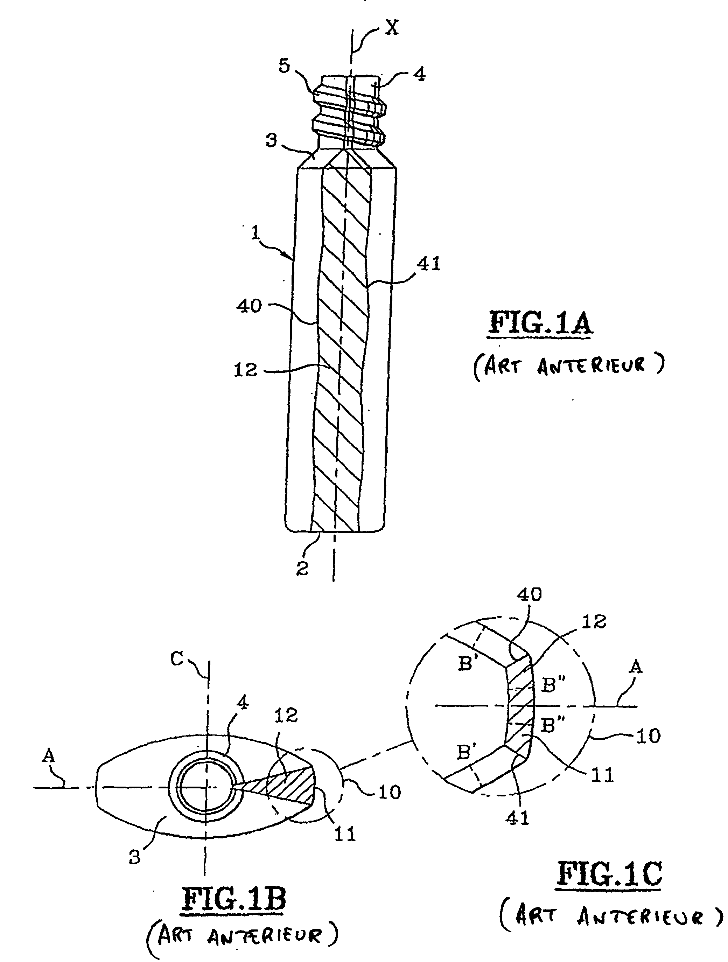

Un des problèmes liés à ces techniques est illustré aux figures 1A-1C. Le récipient représenté est un flacon de type comportant un corps 1 d'axe longitudinal X, fermé en l'une de ses extrémités par un fond 2 et surmonté d'un col 4 auquel le corps est relié par un épaulement 3. Le col comporte un filetage destiné à recevoir de manière amovible un bouchon (non représenté). La section transversale du flacon, illustrée à la figure 1B est de forme allongée et comporte un grand axe A et un petit axe C. L'un des bords 11 parallèles au petit axe C est constitué d'une bande d'un matériau de couleur différente de la couleur du reste du flacon. Comme il apparaît à la figure 1A, la bande de couleur obtenue n'est pas droite, mais présente des frontières avec le reste du flacon qui fluctuent autour d'une position moyenne. La figure 1C représente un agrandissement du bord de la section du flacon (délimité par la zone 10 de la figure 1B). Ainsi, bien qu'il soit souhaitable d'avoir une bande de couleur délimitée par les bords droits, en pratique, chacun des bords latéraux 40, 41 de la bande fluctue entre une position minimale B" et une position maximale B'. Ces variations produisent un rendu visuel qui ne donne pas une impression de netteté, ce qui peut affecter de manière négative la perception que les clients potentiels peuvent avoir sur le contenu du récipient. Ces fluctuations sont liées au procédé de fabrication, et peuvent s'expliquer notamment par des micro courants d'air, des gradients de température qui peuvent avoir une influence non négligeable sur les mouvements de la paraison. De même, des petites variations de densité à l'intérieur même des matériaux, ou des petites variations de température peuvent jouer sur la fluidité et sur l'extensibilité des matériaux, provoquant des variations de largeur de la bande de couleur et/ou de nature différentes. Ces variations sont d'autant plus notables que la bande 12 est de couleur différente du reste du flacon. Elles peuvent également être visibles et pénalisantes lorsque les matériaux sont d'aspect différent. A titre d'exemple, si la bande longitudinale est réalisée en élastomère, d'aspect mat, afin d'améliorer la préhension du flacon, le reste du récipient étant plutôt d'aspect brillant, les fluctuations des bords de la bande seront visibles et pénalisantes. De même, la bande longitudinale peut être d'aspect granuleux, alors que le reste du récipient est d'aspect doux, ou l'inverse.

Un autre problème se posant dans le domaine du conditionnement et du flaconnage, en particulier dans le domaine cosmétique, tient à la prise en main du flacon, notamment dans des conditions, dans lesquelles, dans le cas d'un shampooing par exemple, l'utilisateur a les mains mouillées. A cet effet, on a déjà proposé des flacons présentant une forme épousant la forme de la main, en utilisant une forme de moule particulière. Il existe également des flacons présentant en certains endroits une surcouche d'un matériau élastomérique par exemple. Ces systèmes présentent cependant l'inconvénient de compliquer le procédé de fabrication, augmentant de manière sensible le coût de production de ces récipients. Si la zone de préhension améliorée est réalisée lors du moulage par co-extrusion/soufflage, sous forme d'une ou plusieurs bandes longitudinales, se pose alors le problème de la netteté des bords latéraux des bandes, tel que décrit précédemment.

Aussi, est-ce un des objets de la présente invention que de réaliser un récipient ne présentant pas les problèmes mentionnés ci-avant, en référence aux dispositifs de la technique antérieure.

C'est en particulier un objet de la présente invention que de réaliser un flacon comportant une bande longitudinale constituée d'un matériau de couleur et/ou d'aspect différents du matériau formant le reste du flacon et comportant des moyens pour masquer les variations de largeur de la bande, inhérentes au procédé de fabrication.

C'est un autre objet de la présente invention que de réaliser un récipient mono-matière ou bi-matière, de rigidité améliorée et dont la structure permet une prise en main et un toucher améliorés.

D'autres objets de la présente invention apparaîtront de manière détaillée dans la description qui suit.

Selon l'invention, ces objets sont atteints au moyen d'un récipient thermoplastique pour produit de consistance liquide à pâteuse, d'axe longitudinal X, ledit récipient comprenant au moins bande longitudinale de couleur et/ou d'aspect différents de la couleur et/ou de l'aspect du reste du récipient et délimitée par deux bords latéraux, caractérisé en ce que les bords latéraux de la (ou des) bande(s) longitudinale(s) sont situés à l'intérieur de rainures longitudinales, de manière à masquer les variations de largeur de la bande. Avantageusement, le récipient est réalisé par soufflage d'une ébauche tubulaire dans un moule comportant au moins deux portions de coques aptes à être réunies autour d'un plan de joint D, les rainures longitudinales étant orientées sensiblement perpendiculairement au plan de joint D.

Selon un mode de réalisation préféré, l'ébauche tubulaire est réalisée par co-extrusion de deux matières physico-chimiquement compatibles, tels que des polyéthylènes téréphtalates (PET), des chlorures de polyvinyle (PVC), ou des polyoléfines.

Selon une alternative, l'ébauche tubulaire est réalisée par bi-injection de matériaux tels que des polypropylènes, des polyéthylènes, des Nylons, des chlorures de polyvinyle (PVC), ou des polyéthylènes téréphtalates (PET).

La bande longitudinale peut être translucide de manière à permettre la visualisation de la quantité de produit restant dans le récipient. Elle peut également être constituée d'un élastomère thermoplastique compatible avec le matériau formant le reste du flacon. A titre d'exemple, on peut utiliser un copolymère de styrène-éthylène-butadiène séquencé (SEBS) ou un terpolymère d'éthylène, de propylène et d'un diène (EPDM).

Les rainures peuvent former une gorge ayant sensiblement la forme d'un U.

Le récipient selon l'invention peut se présenter sous la forme d'un flacon comportant un corps dont une extrémité présente un fond et dont l'autre extrémité se termine par un col destiné à recevoir de manière amovible un bouchon, ladite bande longitudinale s'étendant sensiblement sur toute la hauteur du corps du flacon. Avantageusement, le corps du flacon à une section transversale de forme allongée (ovale, elliptique, tronquée ou non en ses extrémités), présentant un grand axe et un petit axe, lesdites rainures étant disposées de part et d'autre du grand axe de manière à délimiter un flanc droit et perpendiculaire au grand axe, ledit flanc étant de couleur et/ou d'aspect différents de la couleur et/ou de l'aspect du reste du flacon. La largeur de la bande longitudinale peut être comprise entre 5 mm et 2 cm.

Avantageusement, les rainures sont orientées de manière parallèle à la bande longitudinale qu'elles encadrent, et définissent une double charnière élastique entre la bande et le reste du récipient, permettant un basculement de la bande longitudinale sensiblement autour d'un plan médian entre les deux rainures, par exemple sous la pression des doigts de l'utilisateur. Cette caractéristique confère un toucher agréable, et une meilleure préhension du flacon. Par ailleurs, la rigidité du flacon se trouve accrue au niveau des charnières.

Le produit de consistance liquide à pâteuse peut être un shampooing, une crème de soin, un gel de coiffage, un dentifrice.

Dans la description détaillée qui suit, il sera fait référence aux dessins dans lesquels:
- les figures 1A-1C illustrent un récipient conventionnel tel que discuté dans le préambule de la présente description;
- la figure 2 représente une vue d'ensemble d'un mode de réalisation particulier du récipient selon l'invention;
- les figures 3A-3D illustrent sous d'autres angles le récipient de la figure 2;
- la figure 4 représente une section transversale d'un second mode de réalisation du récipient selon l'invention; et
- la figure 5 représente une coupe transversale d'un moule utilisé pour la réalisation du récipient représenté aux figures 2 et 3A-3D.

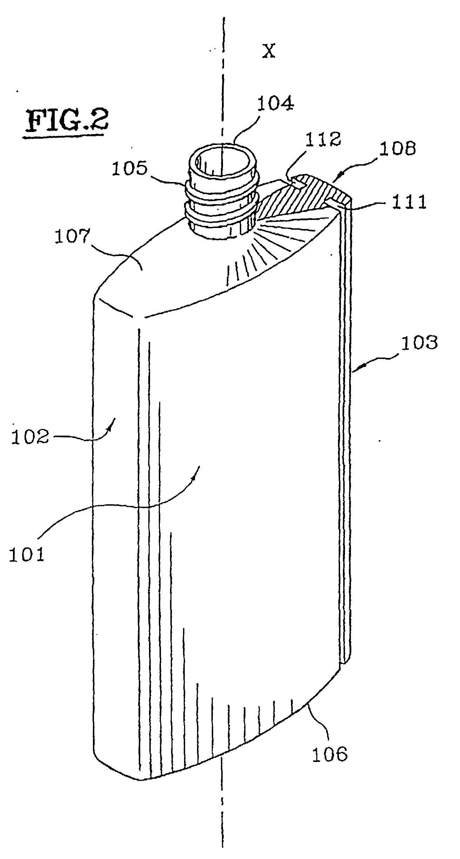

La figure 2 représente un mode de réalisation du récipient 100 selon l'invention. Celui-ci comporte principalement un corps 101 de forme allongée, d'axe longitudinal X et présentant deux flancs sensiblement droits 102, 103. Le corps, à paroi souple ou semi rigide, est fermé en l'une de ses extrémités par un fond 106. Il est surmonté en son autre extrémité d'un col 104, comportant un filetage externe 105 destiné à coopérer avec le filetage interne d'un bouchon (non représenté). Le col est relié au corps du flacon par un épaulement 107.

Le récipient selon l'invention comporte au moins une bande longitudinale 108 d'aspect et/ou de couleur différents de l'aspect et/ou de la couleur du reste du récipient. De préférence, la bande est formée sur sensiblement toute la hauteur du récipient. Selon une caractéristique importante de la présente invention, la bande longitudinale est encadrée par deux rainures longitudinales 111, 112 destinées, comme on le verra plus en détail par la suite, à masquer les variations de largeur de la bande de couleur et/ou d'aspect différents.

En effet, selon l'invention on a constaté qu'il pouvait être avantageux, non pas de s'attaquer directement au problème lié à la variation de largeur de la bande de couleur, mais de masquer ces variations de sorte que la bande apparaisse parfaitement droite. A cet effet, les bords longitudinaux de la bande de couleur sont disposés dans des rainures dont la géométrie et les dimensions sont telles que, pour une bande dont la largeur résultant du soufflage, peut varier entre une valeur minimale B" et une valeur maximale B', les bords de la bande 140, 141 soient sur toute la hauteur de la bande à l'intérieur des deux rainures qui l'encadrent. Ainsi, bien que la bande présente toujours des variations de largeur, inhérentes au procédé de fabrication, les bords visibles de la bande sont délimités de manière rectiligne par les rainures.

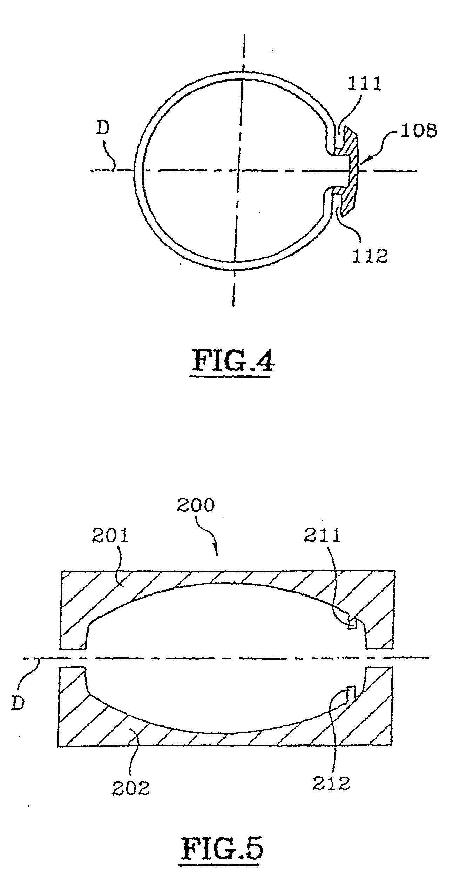

Le récipient selon l'invention peut être réalisé de manière conventionnelle par soufflage d'une ébauche tubulaire (obtenue par coextrusion ou par bi-injection) dans un moule. Une section transversale du moule utilisé pour le récipient de la figure 2 est représentée à la figure 5. Le moule 200 comporte deux demi-coques 201, 202 aptes à être réunies autour d'un plan de joint D, ou plan de démoulage. Le moule 200 est de forme complémentaire de la forme du récipient. Il présente de part et d'autre du plan de joint, deux nervures 211, 212, de forme complémentaire de la forme des rainures 111, 112 du flacon. Les nervures sont orientées de manière à permettre le démoulage du récipient, c'est à dire sensiblement perpendiculairement au plan de joint. Cette dernière caractéristique n'est cependant pas aussi critique pour certains types de matériaux tels que les élastomères dont l'élasticité facilite le démoulage. Par ailleurs, la forme de moule décrite en référence à la figure 5 n'est donnée qu'à titre indicatif. Il existe d'autres types de moule, selon lesquels, par exemple, le moule est constitué de plus de deux portions (3 ou 4, par exemple, en fonction de la forme du récipient à réaliser, et aptes à être réunies autour de 3 ou 4 lignes de jointure. Les rainures dans le récipient doivent là aussi, être orientées de manière à ne pas empêcher le démoulage.

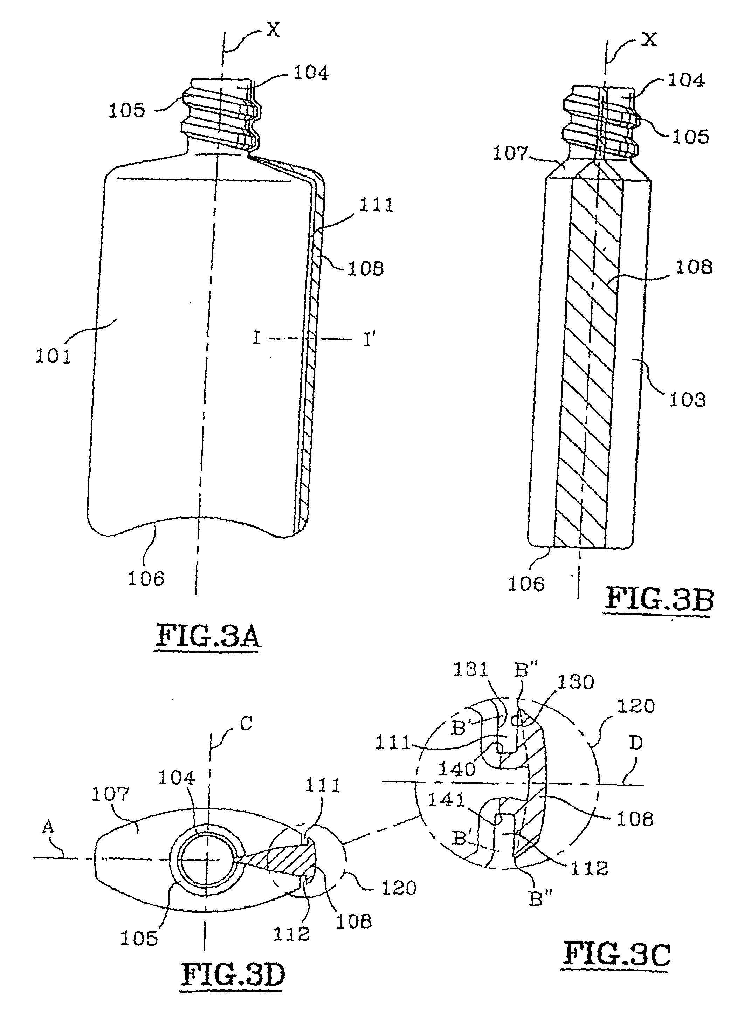

Les figures 3A-3D auxquelles il est maintenant fait référence, illustrent de manière plus précise le masquage des variations de largeur de bande selon l'invention. La figure 3A est une vue de face d'un mode de réalisation du récipient selon l'invention. La figure 3B est une vue de côté du récipient. La figure 3C est une vue en coupe selon I-I' du flanc du récipient. La figure 3D est une vue de dessus du récipient. A des fins d'illustration et de simplicité, on a volontairement repris un récipient de section transversale similaire à celle du flacon de la figure 2.

Ainsi que déjà mentionné, et ainsi qu'il apparaît clairement aux figures 3C et 3D, la bande longitudinale 108 est reliée au reste du récipient par deux rainures 111, 112 de hauteur (selon l'axe principal du flacon) sensiblement égale à la hauteur du corps du flacon. Une première rainure 111 est disposée d'un côté du plan de joint D, une seconde rainure étant disposée de l'autre côté du plan de joint D, les rainures étant disposées de manière à délimiter un flanc sensiblement droit. Dans le mode de réalisation représenté aux figures 3A-3D, la bande longitudinale est centrée sur le plan de joint D. Toutes ces considérations, quoi que préférables d'un point de vue esthétique, pour la forme de flacon représentée, ne constituent cependant pas des caractéristiques obligatoires. Les rainures 111, 112 sont disposées de manière à permettre le démoulage du récipient. Dans le cas d'un moule à deux demi coques, tel que représenté à la figure 5, les rainures sont orientées de manière perpendiculaire au plan de démoulage D. Ainsi qu'il ressort clairement à la figure 3B, la bande 108 présente des bords visibles parfaitement droits.

Telles que représentées à la figure 3C, ces rainures définissent une gorge présentant la forme d'un U. D'autres formes cependant peuvent être cependant réalisées (en V par exemple), l'essentiel étant que la limite réelle 140, 141 de la bande de couleur soit située à l'intérieur des rainures, entre une position minimale B" et une position maximale B'. En deçà de B", ainsi qu'au delà de B', les bords réels de la bande seraient visibles de l'extérieur du récipient. Les caractéristiques géométriques des rainures sont donc déterminées en fonction de l'amplitude des variations de largeur générées par le procédé. A titre d'exemple, la largeur visible de la bande de couleur correspond à la largeur du flanc et est de l'ordre de 1 cm. La largeur des rainures selon le grand axe A est de l'ordre de 1 mm. La profondeur des rainures le long de l'axe B est également de l'ordre de 1 mm. De manière plus générale, la bande de couleur et/ou d'aspect différents peut avoir une largeur visible comprise entre 5 mm et 2 cm.

Selon une alternative non représentée, le récipient comprend une telle bande de couleur et/ou d'aspect différents en chacun de ses flancs.

L'ébauche tubulaire utilisée pour le soufflage peut être obtenue de manière conventionnelle par co-extrusion, ou par multi-injection (bi-injection dans le cas de deux matériaux) de matériaux physico-chimiquement compatibles entre eux, c'est à dire qui sont aptes à créer une liaison entre eux, par thermofusion lors de leur coextrusion. Dans le cas de l'extrusion, qui constitue la technique préférée, on utilise des matériaux tels que des polyéthylènes téréphtalates (PET), des chlorures de polyvinyle (PVC), ou des polyoléfines (polyéthylène, polypropylène). Dans le cas de l'injection, on utilise des matériaux tels que des polypropylènes, des polyéthylènes, des Nylons, des chlorures de polyvinyle (PVC), ou des polyéthylènes téréphtalates (PET).

Selon un mode de réalisation particulier, la bande 108 est réalisée en un matériau translucide de manière à permettre la visualisation de la quantité de produit restant dans le récipient.

Avantageusement , la bande longitudinale peut être réalisée en un élastomère thermoplastique, tel qu'un copolymère de styrène-éthylène-butadiène séquencé (SEBS) ou un terpolymère d'éthylène, de propylène et d'un diène (EPDM) du type SANTOPRENE® commercialisé par la société AES. Une telle caractéristique confère un toucher agréable et permet une préhension améliorée, notamment lorsque le récipient est manié dans des conditions difficiles, avec les mains mouillées par exemple.

La forme du récipient qui vient d'être décrite n'est donnée qu'à titre d'illustration. Il est évident que ce récipient peut de la même manière se présenter, ainsi que représenté à la figure 4, sous forme d'un flacon dont la section transversale est de forme circulaire. D'autres formes encore (hexagonale, carrée, etc.) peuvent être envisagées. Il peut s'agir également d'un tube fermé en l'une de ses extrémités, l'autre extrémité étant surmontée d'un col sur lequel est disposé de manière amovible un bouchon. Le tube peut être fermé en son fond par une ligne de soudure transversale. Le col du flacon peut être surmonté d'une pompe à reprise d'air. Le corps du récipient peut être de type à une ou plusieurs couches, etc..

Le mode de réalisation illustré aux figures 3A à 3D dans lequel les rainures 111, 112 sont orientées de manière sensiblement parallèle à la bande de couleur, est particulièrement avantageux en ce qu'il procure une impression tout à fait originale lorsque l'utilisatrice saisit le récipient. En effet, dans cette configuration, les rainures 111, 112 définissent une double charnière élastique entre la bande 108 et le reste du flacon. Cette charnière permet à la bande, sous l'effet de la pression exercée par les doigts de l'utilisatrice, du fait notamment de l'élasticité du matériau, de basculer sensiblement autour d'un plan médian entre le fond des deux rainures qui l'encadrent, c'est à dire, dans le mode de réalisation illustré, autour du plan D de démoulage, reliant les deux lignes de jointure. Le mouvement est limité de part et d'autre du plan de basculement lorsque le bord 130 commun à la rainure 111 et à la bande de couleur 108 vient en butée contre le bord opposé 131 de la rainure. Ceci donne une impression tactile de souplesse et de préhension, liée à une forte rigidité du flacon dans son ensemble.

Par ailleurs, la bande longitudinale peut constituer avantageusement un moyen original pour la présentation du conditionnement, notamment dans les grandes surfaces. En effet le conditionnement peut être monté sur des glissières arrangées de manière à coopérer avec les rainures délimitant la bande de couleur et/ou d'aspect différents. Selon le même principe, un tel conditionnement peut être porté à la ceinture au moyen d'un mécanisme à glissières. Ainsi, le produit peut être transporté facilement, notamment dans le cas d'un produit hydratant ou de protection solaire pour des randonneurs.

Dans la description qui précède, il a été fait référence à des modes de réalisation préférés de l'invention. Il est évident que des variantes peuvent y être apportées sans s'écarter de l'invention telle que revendiquée ci-après.

## Revendications

1. Récipient en un matériau thermoplastique pour produit de consistance liquide à pâteuse, d'axe longitudinal X, ledit récipient comprenant au moins une bande (108) s'étendant selon ledit axe X, ladite bande étant de couleur et/ou d'aspect différents de la couleur et/ou de l'aspect du reste du récipient et délimitée par deux bords latéraux (140, 141), **caractérisé en ce que** les bords latéraux (140, 141) de la (ou des) bande(s) longitudinale(s) sont situés à l'intérieur de rainures longitudinales (111, 112), de manière à masquer les éventuelles variations de largeur de la bande.

2. Récipient selon la revendication 1 **caractérisé en ce qu'**il est réalisé par soufflage d'une ébauche tubulaire dans un moule comportant au moins deux portions de coques aptes à être réunies autour d'un plan de joint (D), lesdites rainures longitudinales étant orientées sensiblement perpendiculairement au plan de joint (D).

3. Récipient selon la revendication 2 **caractérisé en ce que** l'ébauche tubulaire est réalisée par co-extrusion ou bi-injection de deux matières physico-chimiquement compatibles.

4. Récipient selon la revendication 3 **caractérisé en ce que** l'ébauche tubulaire est réalisée par co-extrusion de matériaux tels que des polyéthylènes téréphtalates, PET, des chlorures de polyvinyle, PVC, ou des polyoléfines.

5. Récipient selon la revendication 3 **caractérisé en ce que** l'ébauche tubulaire est réalisée par bi-injection de matériaux tels que des polypropylènes, des polyéthylènes, des Nylons, des chlorures de polyvinyle, PVC, ou des polyéthylènes téréphtalates, PET.

6. Récipient selon l'une quelconque des revendications 1 à 5 **caractérisé en ce que** ladite bande longitudinale (108) est translucide de manière à permettre de visualiser la quantité de produit restant dans le récipient.

7. Récipient selon l'une quelconque des revendications 1 à 6 **caractérisé en ce que** la bande longitudinale (108) est constituée d'un élastomère thermoplastique compatible avec le matériau formant le reste du flacon

8. Récipient selon la revendication 7 **caractérisé en ce que** l'élastomère thermoplastique est un copolymère de styrène-éthylène-butadiène séquencé, SEBS, ou un terpolymère d'éthylène, de propylène et d'un diène, EPDM.

9. Récipient selon l'une quelconque des revendications 1 à 8 **caractérisé en ce que** lesdites rainures (111, 112) forment une gorge ayant sensiblement la forme d'un U.

10. Récipient selon l'une quelconque des revendications 1 à 9 **caractérisé en ce que** le récipient est un tube fermé en l'une de ses extrémités, l'autre extrémité étant surmontée d'un col sur lequel est disposé de manière amovible un bouchon.

11. Récipient selon l'une quelconque des revendications 1 à 9 **caractérisé en ce que** le récipient est un flacon présentant une hauteur selon l'axe X, et comportant un corps (101) ayant deux extrémités, une extrémité présentant un fond (106), l'autre extrémité se terminant par un col (104) destiné à recevoir de manière amovible un bouchon, ladite bande longitudinale (108) s'étendant sensiblement sur toute la hauteur du corps du flacon.

12. Récipient selon la revendication 11 **caractérisé en ce que** le corps du flacon présente une section transversale perpendiculairement à l'axe X, ladite section étant de forme allongée, et présentant un grand axe (A) et un petit axe (C) lesdites rainures étant disposées de part et d'autre du grand axe (A) de manière à délimiter un flanc droit et perpendiculaire au grand axe, ledit flanc étant de couleur et/ou d'aspect différents de la couleur et/ou de l'aspect du reste du flacon.

13. Récipient selon l'une quelconque des revendication 1 à 12 **caractérisé en ce que** la bande longitudinale (108) présente une largeur comprise entre 5 mm et 2 cm.

14. Récipient selon l'une quelconque des revendications précédentes **caractérisé en ce que** les rainures (111, 112) sont orientées de manière parallèle à la bande longitudinale (108) de couleur et/ou d'aspect différents, et définissent une double charnière élastique entre la bande longitudinale (108), et le reste du récipient, permettant un basculement de la bande longitudinale (108) autour d'un plan médian entre les deux rainures.

15. Récipient selon l'une quelconque des revendications 1 à 14 **caractérisé en ce que** le produit de consistance liquide à pâteuse est un shampooing, une crème de soin, un gel de coiffage.

## Patentansprüche

1. Behälter aus einem thermoplastischen Material für ein Produkt flüssiger bis pastenförmiger Konsistenz, mit einer Längsachse X, wobei der Behälter mindestens ein Längsband (108) aufweist, das sich gemäß der X-Achse erstreckt, wobei das Band eine andere Farbe und/oder ein anderes Aussehen hat als die Farbe und/oder das Aussehen des Rests des Behälters und von zwei Seitenrändern (140, 141) begrenzt wird, **dadurch gekennzeichnet, daß** die Seitenränder (140, 141) des Längsbands (oder der Längsbänder) sich im wesentlichen innerhalb von Längsrillen (111, 112) befinden, um die Breitenschwankungen des Bands zu kaschieren.

2. Behälter nach Anspruch 1, **dadurch gekennzeichnet, daß** er durch Blasen eines rohrformigen Rohlings in einer Form hergestellt wird, die mindestens zwei Schalenabschnitte aufweist, die um eine Verbindungsebene (D) zusammengefügt werden können, wobei die Längsrillen im wesentlichen senkrecht zur Verbindungsebene (D) ausgerichtet sind.

3. Behälter nach Anspruch 2, **dadurch gekennzeichnet, daß** der rohrförmige Rohling durch Coextrusion oder Bi-Injektion von zwei physikalisch-chemisch kompatiblen Stoffen hergestellt wird.

4. Behälter nach Anspruch 3, **dadurch gekennzeichnet, daß** der rohrförmige Rohling durch Coextrusion von Materialien, wie zum Beispiel Polyethylenterephthalat, PET, Polyvinylchlorid, PVC, oder Polyolefin, hergestellt wird.

5. Behälter nach Anspruch 3, **dadurch gekennzeichnet, daß** der rohrförmige Rohling durch Bi-Injektion von Materialien, wie zum Beispiel Polypropylen, Polyethylen, Nylon, Polyvinylchlorid, PVC, oder Polyethylenterephthalat, PET, hergestellt wird.

6. Behälter nach einem der Ansprüche 1 bis 5, **dadurch gekennzeichnet, daß** das Längsband (108) durchscheinend ist, um die Sichtbarmachung der im Behälter verbleibenden Produktmenge zu erlauben.

7. Behälter nach einem der Ansprüche 1 bis 6, **dadurch gekennzeichnet, daß** das Längsband (108) aus einem thermoplastischen Elastomermaterial besteht, das mit dem den Rest des Behälters bildenden Material kompatibel ist.

8. Behälter nach Anspruch 7, **dadurch gekennzeichnet, daß** das thermoplastische Elastomermaterial ein sequentielles Styrol-Ethylen-Butadien-Copolymer, SEBS, oder ein Ethylen/Propylen-Dien-Terpolymer, EPDM, ist.

9. Behälter nach einem der Ansprüche 1 bis 8, **dadurch gekennzeichnet, daß** die Rillen (111, 112) eine Kehle bilden, die im wesentlichen die Form eines U hat.

10. Behälter nach einem der Ansprüche 1 bis 8, **dadurch gekennzeichnet, daß** der Behälter eine an einem ihrer Enden geschlossene Tube ist, während auf dem anderen Ende ein Hals sitzt, auf dem ein Stöpsel in lösbarer Weise angeordnet ist.

11. Behälter nach einem der Ansprüche 1 bis 9, **dadurch gekennzeichnet, daß** der Behälter eine Flasche mit einer Höhe gemäß der Achse X ist, die einen Körper (101) mit zwei Enden aufweist, wobei ein Ende einen Boden (106) besitzt und das andere Ende in einem Hals (104) endet, der einen Stöpsel lösbar aufnehmen soll, wobei das Längsband (108) sich im wesentlichen über die ganze Höhe des Körpers der Flasche erstreckt.

12. Behälter nach Anspruch 11, **dadurch gekennzeichnet, daß** der Körpers der Flasche einen Querschnitt senkrecht zur Achse X aufweist, wobei der Querschnitt länglich ist und eine große Achse (A) und eine kleine Achse (C) hat, wobei die Rillen zu beiden Seiten der großen Achse (A) angeordnet sind, um eine gerade Seitenfläche senkrecht zur großen Achse zu begrenzen, wobei die Seitenfläche eine andere Farbe und/oder ein anderes Aussehen hat als die Farbe und/oder das Aussehen der restlichen Flasche.

13. Behälter nach einem der Ansprüche 1 bis 12, **dadurch gekennzeichnet, daß** die Breite des Längsbands (108) zwischen 5 mm und 2 cm liegt.

14. Behälter nach einem der vorhergehenden Ansprüche, **dadurch gekennzeichnet, daß** die Rillen (111, 112) parallel zum Längsband (108) unterschiedlicher Farbe und/oder Aussehens ausgerichtet sind und ein doppeltes elastisches Scharnier zwischen dem Längsband (108) und dem Rest des Behälters definieren, was ein Kippen des Längsbands (108) um eine Mittellinie zwischen den beiden Rillen ermöglicht.

15. Behälter nach einem der Ansprüche 1 bis 14, **dadurch gekennzeichnet, daß** das Produkt flüssiger bis pastenförmiger Konsistenz ein Shampoo, eine Pflegecreme, ein Haargel ist.

## Claims

1. Container made of a thermoplastic, for a product of liquid-to-pasty consistency, of longitudinal axis X, the said container having at least one band (108) extending along the said X-axis, the said band being of a different colour and/or different appearance to the colour and/or appearance of the rest of the container and being bounded by two lateral edges (140, 141), **characterized in that** the lateral edges (140, 141) of the longitudinal band(s) is (are) located on the inside of the longitudinal grooves (111, 112) so as to mask any variations in the width of the band.

2. Container according to Claim 1, **characterized in that** it is produced by blow-moulding a tubular preform in a mould comprising at least two portions of shells that can be joined about a parting line (D), the said longitudinal grooves being oriented so as to be approximately perpendicular to the parting line (D).

3. Container according to Claim 2, **characterized in that** the tubular preform is produced by the coextrusion or twin-shot injection moulding of two physicochemically compatible materials.

4. Container according to Claim 3, **characterized in that** the tubular preform is produced by the coextrusion of materials such as polyethylene terephthalates, PET, polyvinyl chlorides, PVC, or polyolefins.

5. Container according to Claim 3, **characterized in that** the tubular preform is produced by the twin-shot injection moulding of materials such as polypropylenes, polyethylenes, nylons, polyvinyl chlorides, PVC, or polyethylene terephthalates, PET.

6. Container according to any one of Claims 1 to 5, **characterized in that** the said longitudinal band (108) is translucent so as to allow the amount of product remaining in the container to be displayed.

7. Container according to any one of Claims 1 to 6, **characterized in that** the longitudinal band (108) is made of a thermoplastic elastomer compatible with the material forming the rest of the bottle.

8. Container according to Claim 7, **characterized in that** the thermoplastic elastomer is a styrene/ethylene-butylene/styrene block copolymer, SEBS, or an ethylene-propylene-diene terpolymer, EPDM.

9. Container according to any one of claims 1 to 8, **characterized in that** the said grooves (111, 112) form a substantially U-shaped channel.

10. Container according to any one of Claims 1 to 9, **characterized in that** the container is a tube closed at one of its ends, the other end being surmounted by a neck on which a removable stopper is placed.

11. Container according to any one of Claims 1 to 9, **characterized in that** the container is a bottle of a certain height along the X-axis and comprising a body (101) having two ends, one end having a bottom (106) and the other end terminating in a neck (104) intended to receive a removable stopper, the said longitudinal band (108) extending substantially over the entire height of the body of the bottle.

12. Container according to Claim 11, **characterized in that** the body of the bottle has a cross section perpendicular to the X-axis, the said section being of elongate shape and having a major axis (A) and a minor axis (C), the said grooves lying on each side of the major axis (A) so as to define a straight wall perpendicular to the major axis, the said wall being of a different colour and/or different appearance to the colour and/or appearance of the rest of the bottle.

13. Container according to any one of Claims 1 to 12, **characterized in that** the longitudinal band (108) has a width of between 5 mm and 2 cm.

14. Container according to any one of the preceding claims, **characterized in that** the grooves (111, 112) are oriented so as to be parallel to the longitudinal band (108) of different colour and/or different appearance, and define a double elastic hinge between the longitudinal band (108) and the rest of the container, allowing the longitudinal band (108) to rock about a mid-plane between the two grooves.

15. Container according to any one of Claims 1 to 14, **characterized in that** the product of liquid-to-pasty consistency is a shampoo, a care cream or a hair styling gel.
